# EUROPEAN PATENT SPECIFICATION

(11) **EP 1 686 315 B1**
(45) Date of publication and mention of the grant of the patent: **22.08.2007**
(21) Application number: 06250431.1
(22) Date of filing: 26.01.2006
(51) Int. Cl.: F21V 25/12, F21S 8/02, F21V 31/00

(54) **Fire-resistant cover for lighting fitting**
Feuerfeste Abdeckung für eine Leuchte
Cache resistant au feu pour un appareil d'éclairage

(30) Priority: 27.01.2005 GB 0501605
(43) Date of publication of application: 02.08.2006
(73) Proprietor: RD Europe Limited, Charlton, London SE7 7QW (GB)
(72) Inventor: Hua, Di, London SE7 7BA (GB)
(74) Representative: Wilson Gunn

(56) References cited:
- EP-A- 1 048 896
- EP-A- 1 607 675
- WO-A-98/12472
- WO-A-20/05124225
- DE-A1- 10 216 373
- GB-A- 2 297 609
- US-A- 4 930 054
- www.lightingdirectory.com/products/article /81: Press release for Scolmore Click Fireguard system of 13.01.2005.

## Description

This invention relates to covers for lighting fittings, and to lighting fittings equipped with covers. More specifically, it relates to covers for lighting fittings which inhibit the passage of fire and which protect the light from moisture, and to lighting fittings equipped with such covers.

Lighting fittings are well known in the art. In general, lighting fittings may be classified into three types: freestanding (such as standard lamps), those mounted on a panel (such as wall mounted fittings, or those attached to the ceiling), and those mounted in a panel (such as downlighters typically mounted in a ceiling panel).

The latter type of fitting requires the creation of a sizeable aperture in the panel, through which the body of the lighting fitting is mounted. These are particularly popular because the lighting fitting can be flush or almost flush with the panel in which it is mounted, thereby providing illumination without visually obtrusive fittings.

US 4930054 discloses a recessed lighting fitting and cover according to the preambles of the independent claims.

However, one significant concern relates to the issue of fire safety. It is advisable, and in many situations may be required by health and safety or building regulations, to inhibit the spread of fire between different levels of a multi-storey building, and between different rooms within a building. This is assisted by the provision of a fire-resistant ceiling structure, which inhibits the spread of fire from a burning room below to the rooms above. For example, British Standard BS476 part 21 makes certain requirements about the construction and fire-resistance of a ceiling.

The ability of a ceiling to contain a fire is significantly eroded by the creation of apertures therein for the installation of lighting fittings. This is further compounded by the requirements of such lighting fittings for adequate ventilation to exhaust the heat produced by the lamp, and so further steps are required to ensure that the resistance to fire is maintained. Commonly the lighting fitting is equipped with a 'fire hood' such as that described in UK Patent No GB 2297609, which is fitted over the top of the lighting fitting and provides a suitably fire-resistant barrier over the aperture in which the fitting is mounted. However, this significantly increases the cost of the lighting fitting, as well as the labour costs of installation.

A further concern arises where the lighting fitting is to be used in areas of relatively high atmospheric moisture, such as in a kitchen or bathroom. In order to reduce the risk of electrocution or of damage to the lighting fitting, it is desirable to prevent moisture reaching the interior of the fitting.

The present invention has been conceived with the above issues in mind.

According to a first aspect of the present invention, there is provided a cover for a lighting fitting intended to be mounted in a panel, the cover comprising a light-transmitting part of a heat-resistant material, a flange which extends at least partially around the light-transmitting part and an intumescent material, the cover being arranged to be fitted over a lighting fitting installed in a panel so that light from the fitting can pass through the light-transmitting part and the intumescent material lies adjacent to the panel and between the flange and the panel such that, in use, the intumescent material inhibits the passage of fire in a region between the flange and an adjacent panel.

In the case of a fire on either side of the panel, then the material will inhibit transmission of fire through the aperture between the lighting fitting and the panel in which the lighting fitting is mounted. The cover itself prevents moisture from entering the light fitting from the room, whilst still allowing illumination of the room.

The flange may optionally additionally comprise a rigid, heat resistant material as will be apparent to the man skilled in the art. Suitable materials include, but are not limited to, various metals, especially steel.

In use, the intumescent material is activated by heat to form an arrangement in which it inhibits the passage of fire in a region between the flange and an adjacent panel. Thus the cover can be supplied with the material in a convenient and/or compact form for ease of installation. In the case of fire, the material will be activated to form an arrangement which is effective in inhibiting the transmission of fire.

Suitable intumescent materials include, but are not limited to, expandable granule or powder graphite, or carbon granules, used with rockwool fibre, thermoset epoxy, polymer base materials and glass fibre amongst others, as will be readily apparent to the man skilled in the art.

In a preferred embodiment, the cover is adapted to engage with the lighting fitting. Preferably the means of engagement is sufficient to prevent ingress of moisture between the lighting fitting and the cover. Preferably, the cover is attached to the lighting fitting by means of complementary screw threads on the external surface of the cover and the internal surface of the light fitting, although other suitable complementary fittings could be provided on the cover and lighting fitting respectively. This enables the cover to be attached to the light fitting with the minimum of effort, and removed easily to enable replacement of the lamp. The cover enables the lighting fitting to be used in an environment of relatively high atmospheric moisture, such as in a bathroom or kitchen, without the risk of moisture affecting the electrical connections of the lamp.

The light transmitting part of the cover inhibits the passage of fire between the external surface of the cover and the interior of the lighting fitting. The light transmitting part of the cover may comprise any suitable light transmitting, heat resistant material. Preferably, the light-transmitting part comprises quartz. The light transmitting part may comprise a lens. Preferably, the light-transmitting part is able to withstand a temperature of 800 °C for at least 40 minutes, more preferably 60 minutes, without detriment to its ability to inhibit the transmission of fire between the external surface of the cover and the interior of the light fitting.

According to a second aspect of the present invention, there is provided a lighting fitting suitable for mounting in a panel, wherein said lighting fitting comprises a body in which a lamp may be mounted, a light-transmitting part of a heat-resistant material arranged so that light from the lamp can pass through the light-transmitting part, a flange which extends at least partially around the body of the lighting fitting and an intumescent material arranged, such that, in use, it lies adjacent to the panel and between the flange and the panel such that, in use, the intumescent material inhibits the passage of fire in a region between the flange and an adjacent panel.

The body and the flange may optionally additionally comprise any suitable rigid, heat resistant material. Suitable materials include, but are not limited to, various metals, especially steel.

In the case of a fire on either side of the panel, then material will inhibit transmission of fire through the aperture in the panel in which the lighting fitting is mounted. The light-transmitting part protects the lamp from objects such as projectiles, drops of water etc. which might affect the lamp or the electrical connections thereof.

In use, the intumescent material is activated by heat to form an arrangement in which it inhibits the passage of fire in a region between the flange and an adjacent panel. Thus the cover can be supplied with the material in a convenient and/or compact form for ease of installation. In the case of fire, the material will be activated to form an arrangement which is effective in inhibiting the transmission of fire.

In a preferred embodiment the light-transmitting part is adapted to engage with the body of the lighting fitting. Preferably the means of engagement are sufficient to prevent the ingress of moisture between the light-transmitting part and the body of the lighting fitting. Preferably the light-transmitting part is attached to the body of the lighting fitting by means of complementary screw threads on the external surface of the light-transmitting part and the internal surface of the body of the lighting fitting, although other suitable complementary fittings could be provided on the light transmitting part and lighting fitting respectively This enables the light-transmitting part to be removed easily to enable replacement of the lamp and reattached to the body of the light fitting with the minimum of effort, whilst still providing a moistureproof seal.

In a preferred embodiment, the light-transmitting part inhibits the passage of fire between the external surface of the light-transmitting part and the interior of the body of the lighting fitting. Preferably the light-transmitting part comprises a heat-resistant material. Most preferably, the light-transmitting part comprises quartz. Most preferably the light-transmitting part is able to withstand a temperature of 800 °C for at least 40 minutes, more preferably 60 minutes, without detriment to its ability to inhibit the transmission of fire between the external surface of the light-transmitting part and the interior of the body of the lighting fitting.

In a preferred embodiment, the flange is attached directly to the light-transmitting part, and is removable from the body of the light fitting along with the light-transmitting part.

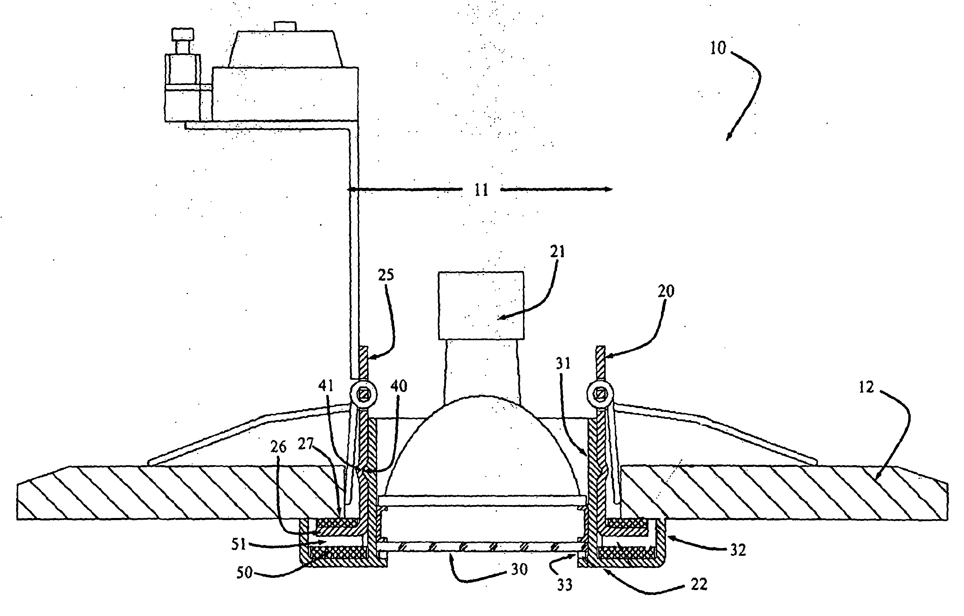

A specific embodiment of the present invention will now be described with reference to the accompanying drawing, which is a section through a lighting fitting equipped with a cover according to the present invention.

A lighting fitting 10 is mounted in an aperture 11 of a ceiling panel 12. The lighting fitting comprises a body 20, a lamp 21, a removable cover 22 and spring clips 23. The spring clips 23 urge the lighting fitting 10 against the ceiling panel 12 in order to securely mount the lighting fitting in place. It is preferable that the spring clips 23 are of high quality steel, such as tempered steel, which can withstand temperatures of at least 400-500 °C, without significantly losing its mechanical properties. It is known that conventional spring clips in conventional lighting fittings may fail during a fire, at which point the entire fitting may break away from the ceiling panel.

The body 20 of the lighting fitting comprises a substantially cylindrical, continuous, rigid sidewall 25 which extends to form an annular flange 26. The rigid wall 25 and flange 26 of the body 20 may be constructed from any suitably heat-tolerant material apparent to the man skilled in the art, such as 1 mm thick steel. However, high quality steel will of course offer better performance. Attached to the internal surface of flange 26 (i.e. the surface adjacent to the panel 12) is a layer of intumescent material 27 which extends around the entire circumference of the rigid wall 25. In the event of a substantial increase in the temperature (e.g. in the event of a fire), the intumescent material 27 will expand to provide a fire-proof seal against the panel 12.

The cover 22 itself comprises a substantially circular plate of quartz 30 which transmits light from the lamp 21 to illuminate the room, and a substantially cylindrical, continuous, rigid wall 31 which extends to form an annular flange 32. The plate of quartz 30 may optionally be coloured, and may be clear or frosted, through techniques readily apparent to the man skilled in the art, in order to alter the form of illumination provided by the light fitting. The rigid wall 31 and flange 32 of the cover 22 may be constructed from any suitably heat-tolerant material apparent to the man skilled in the art, such as 1 mm thick steel. The quartz plate 30 occupies the entirety of the cross-section of cylindrical wall 31 and is held in place by a waterproof silicon rubber seal 33.

The cylindrical rigid wall 31 of the cover 22 fits inside the cylindrical rigid wall 25 of the body 20 of the lighting fitting 10, and is secured in place by means of a projection 40 on the external surface of the wall 31 of the cover, which engages with a corresponding indentation 41 in the internal surface of the wall of the body 25 of the lighting fitting. The flange 32 of the cover 22 is sufficiently wide that it extends beyond the flange 26 of the body 20 of the lighting fitting 10 at all points around the circumference of the flange 26.

Attached to the internal surface of the flange 32 *(i.e.* between the flange and both the panel 12 and the flange 26 of the body 20 of the lighting fitting) is an annular layer of intumescent material 50. Any suitable intumescent material apparent to the man skilled in the art may be used, including, but not limited to expandable granule or powder graphite, or carbon granules, used with rockwool fibre, thermoset epoxy, polymer base materials and glass fibre amongst others, as will be readily apparent to the man skilled in the art.

In the event of a significant increase in temperature (for example, during a fire in the room below), this material will expand in size to form a fire-proof seal between the flange 32 and both the panel 12 and the flange 26, and thereby prevent flames from being able to travel through the region between the cover 22 and the body 20 of the lighting fitting 10, and through the region between the body 20 of the lighting fitting 10 and the panel 12.

The internal surface of the intumescent material 50 attached to the flange 32 is coated with a layer of silicone rubber 51. In use, this contacts the panel 12 and the external surface of the flange 26 of the body 20 of the lighting fitting, thereby forming a waterproof seal to prevent ingress of moisture into the interior of the lighting fitting. During assembly, the silicone rubber 51 may be formed to protrude further than the height of the intumescent material 27, so as to allow compaction of the silicone upon the fitting being placed against a ceiling panel.

The embodiment is described by way of example only, and many variations are possible within the scope of the appended claims.

## Claims

1. A cover (22) for a lighting fitting (10) intended to be mounted in a panel (12), the cover comprising a light-transmitting part of a heat-resistant material (30), a flange (32) which extends at least partially around the light-transmitting part, the cover being arranged to be fitted over a lighting fitting installed in a panel so that light from the fitting can pass through the light-transmitting part **characterised in that** said cover (22) further comprises an intumescent material (50) arranged such that, when the cover is fitted over a lighting fitting installed in a panel and prior to activation of the intumescent material by heat, it lies between the flange and the panel, and that, on activation by heat, it inhibits the passage of fire in a region between the flange and the panel.

2. The cover of claim 1 wherein the flange additionally comprises a rigid, heat resistant material.

3. The cover of any preceding claim wherein the cover is adapted to engage with the lighting fitting.

4. The cover of claim 3 wherein the means of engagement is sufficient to prevent ingress of moisture between the lighting fitting and the cover.

5. The cover of claim 4 wherein, the cover is attached to the lighting fitting by means of complementary screw threads on an external surface of the cover and an internal surface of the lighting fitting.

6. The cover of any preceding claim wherein the cover inhibits the passage of fire between an external surface of the cover and the interior of the lighting fitting.

7. The cover of any of claims 1 to 6 wherein the light-transmitting part comprises quartz.

8. The cover of any of claims 1 to 7 wherein the light-transmitting part is able to withstand a temperature of 800°C for at least 40 minutes without detriment to its ability to inhibit the transmission of fire between the external surface of the cover and the interior of the lighting fitting.

9. The cover of any of claims 1 to 8 wherein the flange comprises the intumescent material.

10. A lighting fitting (10) suitable for mounting in a panel (12), wherein said lighting fitting comprises a body (20) in which a lamp (21) may be mounted, a light-transmitting part of a heat-resistant material (30) arranged so that light from the lamp can pass through the light-transmitting part, and a flange (26, 32) which extends at least partially around said body of the lighting fitting **characterised in that** said lighting fitting further comprises an intumescent material (27, 50) arranged so that when the fitting is installed in the panel and prior to activation of the intumescent material by heat, the intumescent material lies between the flange and panel, and that, on activation by heat, it inhibits the passage of fire in a region between the flange and the panel.

11. The lighting fitting of claim 10 wherein the flange additionally comprises a rigid, heat-resistant material.

12. The lighting fitting of claims 10 or 11 wherein the light-transmitting part comprises quartz.

13. The lighting fitting of claim 12 wherein the light-transmitting part is able to withstand a temperature of 800°C for at least 40 minutes without detriment to its ability to inhibit the transmission of fire between the external surface of the cover and the interior of the lighting fitting.

## Patentansprüche

1. Eine Abdeckung (22) für eine Leuchte (10), die dafür vorgesehen ist, in einer Konsole (12) befestigt zu werden, wobei die Abdeckung einen lichtdurchlässigen Teil aus einem hitzebeständigen Werkstoff (30) umfasst, sowie einen Flansch (32), der sich zumindest teilweise um den lichtdurchlässigen Teil herum erstreckt, wobei die Abdeckung so angeordnet ist, um über einer Leuchte eingepasst zu werden, die in einer Konsole so eingebaut ist, dass das Licht vom Einbauteil durch den licht durchlässigen Teil durchgehen kann,
**dadurch gekennzeichnet, dass**
die Abdeckung (22) des Weiteren einen anschwellenden Werkstoff (50) umfasst, der in der Weise angeordnet ist dass, wenn die Abdeckung über einer Leuchte eingepasst wird, welche in einer Konsole eingebaut ist, und vor dem Aktivieren des anschwellenden Werkstoffs mittels Hitze, sich dieser zwischen dem Flansch und der Konsole befindet, und dass dieser beim Aktivieren mittels Hitze, in einem Bereich zwischen dem Flansch und der Konsole, den Durchtritt von Feuer verhindert.

2. Die Abdeckung aus Anspruch 1, worin der Flansch zusätzlich einen steifen, hitzebeständigen Werkstoff umfasst.

3. Die Abdeckung aus jedem vorangehenden Anspruch, worin die Abdeckung angepasst wird, um in die Leuchte einzugreifen.

4. Die Abdeckung aus Anspruch 3, worin die Eingriffseinrichtung ausreicht, um den Eintritt von Feuchtigkeit zwischen die Leuchte und die Abdeckung zu verhindern.

5. Die Abdeckung aus Anspruch 4, worin die Abdeckung an der Leuchte, mittels aufeinander abgestimmter Schraubengewinde, auf einer Außenfläche der Abdeckung und einer Innenfläche der Leuchte befestigt wird.

6. Die Abdeckung aus jedem vorangehenden Anspruch, worin die Abdeckung den Durchtritt von Feuer zwischen einer Außenfläche der Abdeckung und der Innenfläche der Leuchte verhindert.

7. Die Abdeckung aus jedem der vorangehenden Ansprüche 1 bis 6, worin der lichtdurchlässige Teil einen Quarz umfasst.

8. Die Abdeckung aus jedem der vorangehenden Ansprüche 1 bis 7, worin der lichtdurchlässige Teil im Stande ist, einer Temperatur von 800°C Über mindestens 40 Minuten hinweg zu widerstehen, ohne Beeinträchtigung seiner Fähigkeit, den Durchtritt von Feuer zwischen einer Außenfläche der Abdeckung und der Innenfläche der Leuchte zu verhindern.

9. Die Abdeckung aus jedem der vorangehenden Ansprüche 1 bis 8, worin der Flansch den anschwellenden Werkstoff umfasst.

10. Eine Leuchte (10), die zum Anbringen in einer Konsole (12) geeignet ist, worin die Leuchte einen Körper (20) umfasst, in dem eine Lampe angebracht werden kann, sowie ein lichtdurchlässiger Teil aus einem hitzebeständigen Werkstoff (30) so angeordnet ist, dass das Licht der Lampe durch den lichtdurchlässigen Teil durchgehen kann, und einen Flansch (26, 32), der sich zumindest teilweise um den Körper der Leuchte herum erstreckt,
**dadurch gekennzeichnet, dass**
die Leuchte des Weiteren einen anschwellenden Werkstoff (27, 50) umfasst, welcher so angeordnet ist dass, wenn das Einbauteil in der Konsole eingebaut ist, und vor dem Aktivieren des anschwellenden Werkstoffs mittels Hitze, sich dieser sich zwischen dem Flansch und der Konsole befindet, und dass beim Aktivieren mittels Hitze, dieser den Durchtritt von Feuer in einem Bereich zwischen dem Flansch und der Konsole verhindert.

11. Die Leuchte aus Anspruch 10, worin der Flansch zusätzlich einen steifen, hitzebeständigen Werkstoff umfasst.

12. Die Leuchte aus Anspruch 10 oder 11, worin der lichtdurchlässige Teil einen Quarz umfasst.

13. Die Leuchte aus Anspruch 12, worin der lichtdurchlässige Teil im Stande ist, einer Temperatur von 800°C über mindestens 40 Minuten hinweg zu widerstehen, ohne Beeinträchtigung seiner Fähigkeit, den Durchtritt von Feuer zwischen einer Außenfläche der Abdeckung und der Innenfläche der Leuchte zu verhindern.

## Revendications

1. Cache (22) pour un montage d'éclairage (10) destiné à être monté dans un panneau (12), le cache comprenant une partie de transmission de la lumière d'un matériau résistant à la chaleur (30), une bride (32) qui s'étend au moins partiellement autour de la partie de transmission de la lumière, le cache étant agencé pour être adapté sur un montage d'éclairage installé dans un panneau de façon à ce que la lumière du montage puisse passer à travers la partie de transmission de la lumière **caractérisé en ce que** ledit cache (22) comprend en outre un matériau intumescent (50) agencé de façon à ce que, lorsque le cache est adapté sur un montage d'éclairage installé dans un panneau et avant activation du matériau intumescent par la chaleur, il s'étend entre la bride et le panneau, et **en ce que**, au moment de l'activation par la chaleur, il inhibe le passage de feu dans une région entre la bride et le panneau.

2. Cache selon la revendication 1 dans lequel la bride comprend également un matériau rigide, résistant à la chaleur.

3. Cache selon l'une des revendications précédentes dans lequel le cache est adapté pour s'enclencher avec le montage d'éclairage.

4. Cache selon la revendication 3 dans lequel le moyen d'enclenchement est suffisant pour empêcher l'entrée d'humidité entre le montage d'éclairage et le cache.

5. Cache selon la revendication 4 dans lequel, le cache est attaché au montage d'éclairage au moyen de filetages de vis complémentaires sur une surface externe du cache et une surface interne du montage d'éclairage.

6. Cache selon l'une des revendications précédentes dans lequel le cache inhibe le passage de feu entre une surface externe du cache et l'intérieur du montage d'éclairage.

7. Cache selon l'une des revendications 1 à 6 dans lequel la partie de transmission de la lumière comprend du quartz.

8. Cache selon l'une des revendications 1 à 7 dans lequel la partie de transmission de la lumière est capable de résister à une température de 800 °C pendant au moins 40 minutes sans porter préjudice à sa capacité d'inhiber la transmission de feu entre la surface externe du cache et l'intérieur du montage d'éclairage.

9. Cache selon l'une des revendications 1 à 8 dans lequel la bride comprend le matériau intumescent.

10. Montage d'éclairage (10) adapté pour être monté dans un panneau (12), dans lequel ledit montage d'éclairage comprend un corps (20) dans lequel une lampe (21) peut être montée, une partie de transmission de la lumière d'un matériau résistant à la chaleur (30) agencée de façon à ce que la lumière de la lampe puisse passer à travers la partie de transmission de la lumière, et une bride (26, 32) qui se prolonge au moins partiellement autour dudit corps du montage d'éclairage **caractérisé en ce que** ledit montage d'éclairage comprend en outre un matériau intumescent (27, 50) agencé de façon à ce que lorsque le montage est installé dans le panneau et avant activation du matériau intumescent par la chaleur, le matériau intumescent s'étend entre la bride et le panneau, et **en ce que**, au moment de l'activation par la chaleur, il inhibe le passage de feu dans une région entre la bride et le panneau.

11. Montage d'éclairage selon la revendication 10 dans lequel la bride comprend également un matériau rigide, résistant à la chaleur.

12. Montage d'éclairage selon les revendications 10 ou 11 dans lequel la partie de transmission de la lumière comprend du quartz.

13. Montage d'éclairage selon la revendication 12 dans lequel la partie de transmission de la lumière est capable de résister à une température de 800 °C pendant au moins 40 minutes sans porter préjudice à sa capacité d'inhiber la transmission de feu entre la surface externe du cache et l'intérieur du montage d'éclairage.
